(19) Europäisches Patentamt
European Patent Office
Office européen des brevets

(11) **EP 1 744 302 A2**

(12) **EUROPEAN PATENT APPLICATION**

(43) Date of publication:
**17.01.2007 Bulletin 2007/03**

(51) Int Cl.:
**G10K 11/172** $^{(2006.01)}$

(21) Application number: **06253666.9**

(22) Date of filing: **13.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.07.2005 US 698918 P**
**17.12.2005 US 751013 P**

(71) Applicants:
• **Eatwell, Graham P.**
**Annapolis, MD 21401 (US)**

• **Busch, Ralph Edgar**
**Mercersburg, PA 17235 (US)**

(72) Inventors:
• **Eatwell, Graham P.**
**Annapolis, MD 21401 (US)**
• **Busch, Ralph Edgar**
**Mercersburg, PA 17235 (US)**

(74) Representative: **Small, Gary James et al**
**Carpmaels & Ransford**
**43 Bloomsbury Square**
**GB-London WC1A 2RA (GB)**

(54) **Vibration excited sound absorber with dynamic tuning**

(57) Sound radiation from a region of a vibrating surface is reduced by coupling a stiff structure (102) to the vibrating surface (106) using a first compliant element (104), such that the region of the vibrating surface is substantially covered. A dynamic force is applied to the stiff structure. The dynamic force reacts against a mass element (212) and is selected to minimize the radiated sound. The dynamic force may be applied using a passive, semi-active or active coupling between the mass element and the stiff structure.

**FIG. 1**

EP 1 744 302 A2

**Description**

**CROSS-REFERENCE TO RELATED APPLICATIONS**

This application claims the benefit of US Provisional application 60/698,918 filed 14th July 2005 and US Provisional application 60/751,013 filed 17th December 2005.

**FIELD**

This invention relates generally to the field of sound control. More particularly, this invention relates to the control of sound radiated from a vibrating surface or other sound source.

**BACKGROUND**

Previous approaches to controlling sound from vibrating surfaces include enclosures, surface treatments, active sound control systems and vibration excited sound absorbers. These approaches modify the radiated sound but have little effect on the vibration level of the vibrating surface. Other approaches include active control vibration control and tuned vibration absorbers (TVA's) which seek to control the vibration of the vibrating surface.

One difficulty with controlling the surface vibration using TVA's is that many structures, such as large industrial structures, have very stiff surfaces and require large control forces. This, in turn, requires highly tuned absorbers with large masses. Another difficulty with TVA's and other discrete vibration control schemes is that controlling forces are applied at discrete points. The vibration at these points and other points is highly coupled, making it very difficult to predict the performance of a vibration control system. For example, reduction of the vibration at one location on the vibrating surface may result in increased vibration elsewhere on the vibrating surface.

Another approach is the use of a vibration excited sound absorber (US 6,478,110 B1). This approach couples a tuned body to a vibrating surface. Ideally, the volume velocity of the tuned body is out of phase with the volume velocity of the surface and so reduces the radiated sound. However, tuning the vibrating body to provide the matching volume velocity at low frequencies has proven to be difficult without the use of expensive components such as metal bellows. Further, this approach provides noise reduction at selected frequencies only.

**BRIEF DESCRIPTION OF THE DRAWINGS**

The novel features believed characteristic of the invention are set forth in the appended claims. The invention itself, however, as well as the preferred mode of use, and further objects and advantages thereof, will best be understood by reference to the following detailed description of an illustrative embodiment when read in conjunction with the accompanying drawing(s), wherein:

**FIG. 1** is a sectional view of a sound absorber consistent with various embodiments of the invention.

**FIG. 2** is a further sectional view of a sound absorber consistent with various embodiments of the invention.

**FIG. 3** is an exterior view of a sound absorber consistent with various embodiments of the invention.

**FIG. 4** is a cross-sectional view of the sound absorber of **FIG. 3.**

**FIG. 5** is a further sectional view of a sound absorber consistent with various embodiments of the invention.

**FIG. 6** is a graph of predicted performance of an exemplary sound absorber.

**FIG. 7** is a graph of measured performance of an exemplary sound absorber.

**FIG. 8** is a sectional view of an active sound absorber consistent with various embodiments of the invention.

**FIG. 9** is a further sectional view of a sound absorber consistent with various embodiments of the invention.

**FIG. 10** is a graph of calculated performance of an exemplary sound absorber.

**FIG. 11** is a further sectional view of a sound absorber consistent with various embodiments of the invention.

**FIG. 12** is a further sectional view of an active sound absorber consistent with various embodiments of the invention.

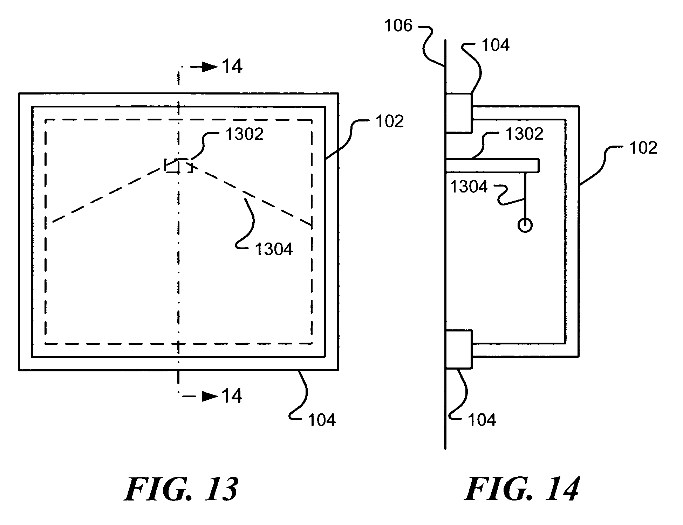

**FIG. 13** is a diagram of a sound absorber with a support element, consistent with various embodiments of the invention.

**FIG. 14** is a cross-sectional view of the sound absorber of **FIG. 13.**

**DETAILED DESCRIPTION**

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described. In the description below, like reference numerals are used to describe the same, similar or corresponding parts in the several views of the drawings.

One embodiment of the invention relates to a vibration controlled sound absorber operable to reduce sound radiated from a region of a vibrating surface. The vibration controlled sound absorber comprises a stiff structure, a compliant element coupled to the stiff structure, and a tuned vibration absorber (which may be passive, active or semi-active) coupled to the stiff structure and adapted to reduce vibration of the stiff structure at one or more frequencies. The stiff structure and the compliant element cover and acoustically seal the region of the vibrating surface over a frequency range.

The tuned vibration absorber includes a mass element and a coupling element that couples between the mass element and the stiff structure. The coupling applies a dynamic force to the stiff structure that resists motion of the stiff structure at the first frequency. This force uses the mass element as a reaction mass. The stiff structure substantially covers the region of the vibrating surface. For example, when it covers more than 50% of the region, sound reduction may usually be achieved by controlling the vibration level of the stiff structure to be lower that the vibration level of the vibration surface. When the stiff structure covers a greater proportion of the vibrating surface, greater that 80% for example, sound reduction may usually be achieved by controlling the vibration level of the stiff structure to be much lower than the vibration level of the vibration surface. The coupling element, together with exposed regions of the surface, may radiate sound. In this case, the sound radiated from the stiff element may be controlled such the total acoustic volume velocity (source strength) is much reduced.

The compliant element is compliant relative to the stiff structure and may, additionally, be compliant relative to vibrating surface.

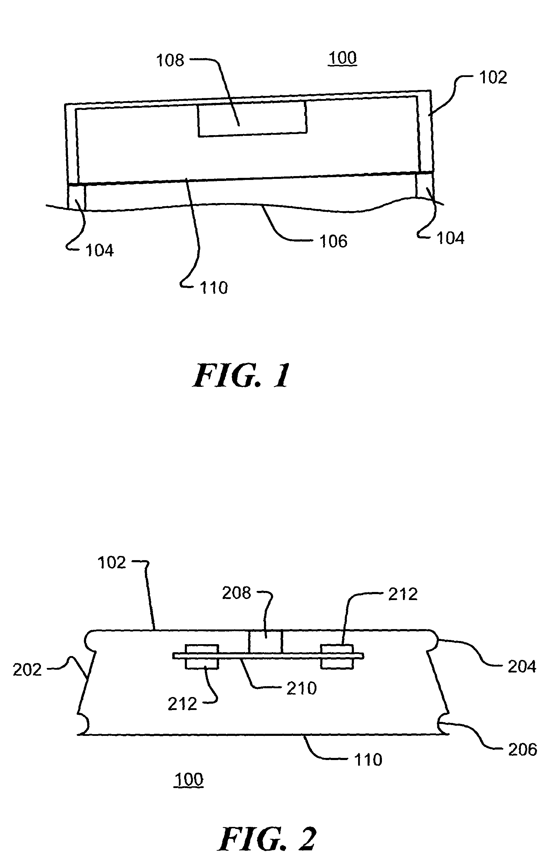

**FIG. 1** is sectional view of a vibration controlled sound absorber consistent with various embodiments of the invention. Referring to **FIG. 1**, the vibration controlled sound absorber 100 comprises a stiff (substantially rigid) structure 102 that is adapted to be mounted via a compliant coupling element 104 to a vibrating surface 106. The combination of the stiff structure 102 and the compliant coupling element 104 cover and acoustically seal a region of the vibrating surface, thereby preventing the region from directly radiating sound. The acoustical seal may contain slow air leaks to equalize static pressure differences between the interior and exterior of the sound absorber, but the acoustic seal should prevent most of the direct radiation of sound from the region at frequencies of interest. In a further embodiment, the acoustic seal comprises a narrow space between the sound absorber and the vibrating surface. The gap is sufficiently narrow as to present high acoustic impedance at the frequencies of interest. The region may still radiate sound indirectly by mechanical excitation of the stiff structure 102 through the compliant coupling element 104 and by acoustic excitation of the stiff structure 102. Attached to the stiff structure, or integrated with it, is a tuned vibration absorber, or TVA, 108. The TVA is tuned to have a resonance frequency equal to or close to a frequency of vibration of the vibrating surface 106. Many types and designs of TVA's are known to those of ordinary still in the art and may be used with the present invention. Close to the resonance frequency of the TVA, vibration of the stiff structure is reduced and hence the sound radiated from the vibrating surface is also reduced. Sound radiated from the vibrating surface is also reduced at higher frequencies because the force transmitted through the compliant coupling element 104 is insufficient to overcome the combined inertia of the stiff structure 102 and the TVA 108.

The vibration controlled sound absorber 100 may include an averaging plate 110 to provide additional stiffness or to acoustically seal the stiff structure 102.

The impedance of the stiff structure 102 on the compliant coupling element 104 may be designed to be much less than the impedance of the vibrating surface 106, thus a smaller TVA may be used than would be required to control motion of the vibrating surface itself. In addition, the compliant element decouples one vibration controller sound absorber from other vibration controller sound absorbers on the same structure, and from the surface itself. Thus performance prediction is greatly simplified. Additionally, there is no increase in vibration levels of untreated regions of the vibrating surface.

The compliant coupling may be, for example, closed cell foam, rubber, metal bellows, elastomeric material or other compliant material, or a combination of materials. For example, the compliant coupling may be a seal or suspension attached to the periphery of the stiff structure or it may be a mounting post attached to the interior or a combination thereof. The compliant coupling may include an air spring.

**FIG. 2** is further sectional view of a vibration controlled sound absorber consistent with various embodiments of the invention. In **FIG. 2,** the compliant element includes a frame 202, together with upper and lower convolution elements 204 and 206 respectively. Flexure of the convolution elements provides the desired compliance. The upper and lower convolution elements and the frame may be constructed of metal, elastomers or other suitable materials and may be formed using well known techniques. In further embodiments, only the upper or lower convolution element is used rather than both. In a still further embodiment, the upper or lower convolution element may comprise multiple convolutions.

In the embodiment shown in **FIG. 2,** the TVA takes the form of a stiff post 208 supporting a dual cantilevered spring 210. Masses 212 are located near the ends of the spring 210. The location of the masses 212 on the spring 210 may be adjusted to tune the TVA.

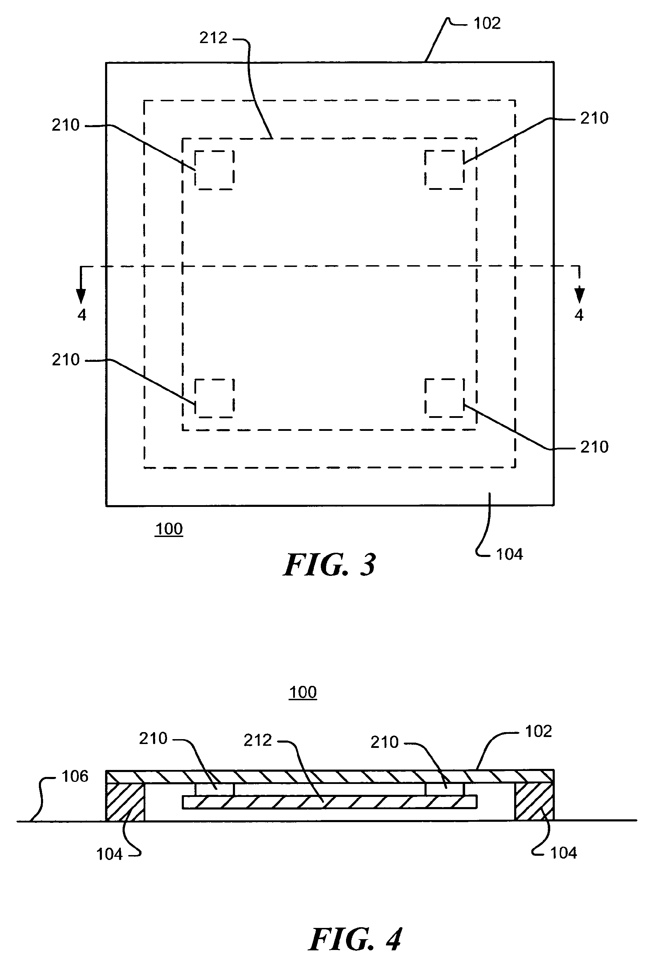

**FIG. 3** is an exterior view of a vibration controlled sound absorber consistent with various embodiments of the invention. In this embodiment, the stiff structure 102 is a rectangular plate, with a compliant coupling element 104 around its perimeter. A mass element 212 is coupled to the underside of the plate 102 via four springs 210. The springs may be coil springs, rubber blocks, foam blocks or other compliant elements. The combined stiffness of the springs 210 and the mass of the mass element 212 are selected to yield a desired resonance frequency.

**FIG. 4** is cross-sectional view through the section 4-4 of the vibration controlled sound absorber of **FIG. 3.** In this embodiment, the TVA comprises a mass element 212 coupled to the stiff structure 102 via four elements and enclosed within the cavity formed by the stiff structure 102, compliant element 104 and the vibrating surface 106. In an alternative embodiment the TVA is attached to the exterior surface of the stiff structure 102.

In further embodiments, multiple TVA's may be used. The TVA's may be tuned to the same frequency and distributed across the stiff structure to reduce rocking modes of the stiff structure. The TVA's may be tuned to different frequencies to reduce sound at multiple frequencies.

The TVA may be adaptively tuned so that the resonance frequency matches a specified frequency or a dominant vibration frequency of the vibrating surface.

The TVA may be adaptively tuned to minimize vibration of the stiff structure. Adaptive tuning, also known as semi-active control, of tuned vibration absorbers is well known to those of ordinary skill in the art.

The TVA may be an actuator that is actively controlled to apply forces to the stiff structure to reduce vibration of the stiff structure or to reduce radiated sound. In this embodiment, a sensor may be used to sense the vibration of the stiff structure or the radiated sound and provide a signal to a control system (such as an electronic control system). A reference signal, related to the amplitude and/or timing of the vibration of surface 106 may also be provided to the control system.

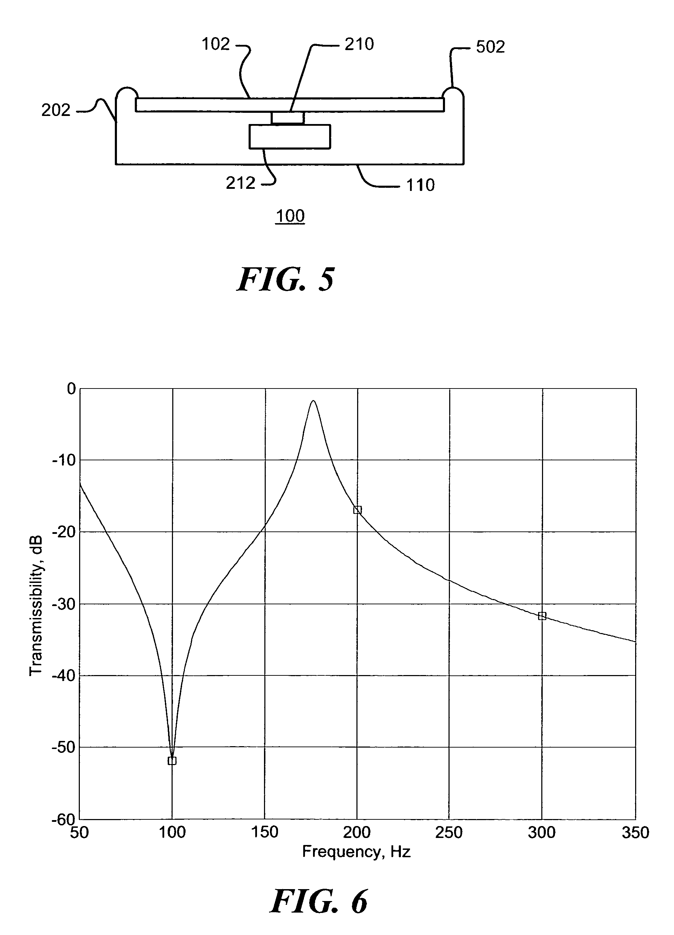

**FIG. 5** is a further sectional view of a vibration controlled sound absorber consistent with various embodiments of the invention. In this embodiment, the compliant element 102 is provided by a suspension 502 supported from frame 202. Compliance is achieved, for example, by bending or stretching of the suspension. Suspension such as those known for use loudspeakers and electromagnetic shakers may be used. The TVA is implemented as a mass element 212 on a spring 210. Averaging plate 110 may be compliantly or rigid mounted to the vibrating surface.

For a TVA that can be modeled as a mass element 212 with mass $m_1$ on a spring 210 with stiffness $k_1$ the displacement $x_1$ of the mass element at radian frequency $\omega$ is given by

$$-\omega^2 m_1 x_1 = k_1 \left( x_2 - x_1 \right)$$

where $x_2$ is the displacement of the stiff structure

The displacement $x_2$ of the stiff structure satisfies

$$-\omega^2 m_2 x_2 = k_1 \left( x_1 - x_2 \right) + k_2 \left( x_0 - x_2 \right)$$

where $k_2$ is the combined stiffness of the compliant element 104 and the entrapped air in the cavity behind the stiff structure, $m_2$ is the mass of the stiff structure and $x_0$ is the displacement of the vibrating surface 106.

The displacement $x_2$ of the stiff structure can therefore be related to the vibration of the vibrating surface 106, by the transmissibility

$$T = \frac{x_2}{x_0} = \frac{k_2 \left( k_1 - \omega^2 m_1 \right)}{\left( k_1 + k_2 - \omega^2 m_2 \right)\left( k_1 - \omega^2 m_1 \right) - k_1^2}$$

**FIG. 6** is graph of predicted transmissibility as a function of frequency for an exemplary vibration controlled sound absorber tuned for 100 Hz. That is, the mass and stiffness of the TVA are chosen to satisfy $\dfrac{k_1}{m_1} = \left( 2\pi.100 \right)^2.$

**FIG. 6** shows a predicted reduction of 50dB at the tuned frequency. **FIG. 6** also shows that reductions are also obtained at higher frequencies. In particular, at the reductions are achieved at the harmonic frequencies of 200Hz and 300Hz.

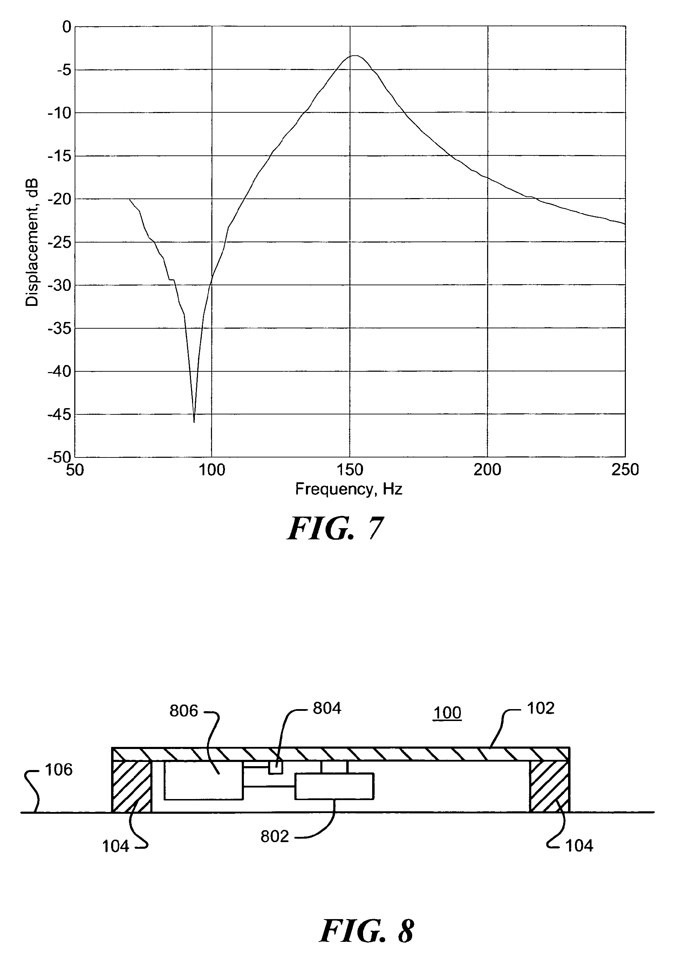

**FIG. 7** is graph of measured performance of an exemplary vibration controlled sound absorber. The graph shows measured displacement as a function of frequency for a constant excitation level. In this example, a constant force excitation was used and the excited structure was stiffness dominated, so the plot is related to transmissibility, although with an unknown offset. In this example the TVA was tuned for about 93.5Hz. Again, displacement reduction is achieved across a broad range of higher frequencies. In this embodiment, the stiff structure was a 12 inch square honeycomb aluminum plate supported on closed-cell foam at is perimeter. The TVA was an 8 inch disc-shaped mass supported at its periphery by a metal bellows spring.

**FIG. 8** is a sectional view of an active vibration controlled sound absorber consistent with various embodiments of the invention. Referring to **FIG. 8,** the motion of the stiff structure 102 is controlled by one or more actuators 802. The actuator may be a pressure actuator, such as a loudspeaker, or an inertial actuator such as an electromagnetic shaker. One or more vibration sensors 804 sense residual vibration of the stiff structure and produce error signals that are passed to a controller 806. The controller 806 may, for example, be an adaptive controller or a controller having a predetermined control characteristic. The controller 806 generates a control signals to drive the one or more actuators 802. The control signals are amplified in an amplifier that may be incorporated in the controller 806 or the actuator 802, or may be a separate unit.

The controller 806 may receive additional signals from one or more reference sensors. The reference sensors provide signals that are related in amplitude and/or timing to the vibration source. Example reference sensors are vibration sensors, pressure sensors, tachometers for rotating or reciprocating vibration sources, timing signals for impulsive sources, and synchronizing signals for power transformers and other electrical equipment.

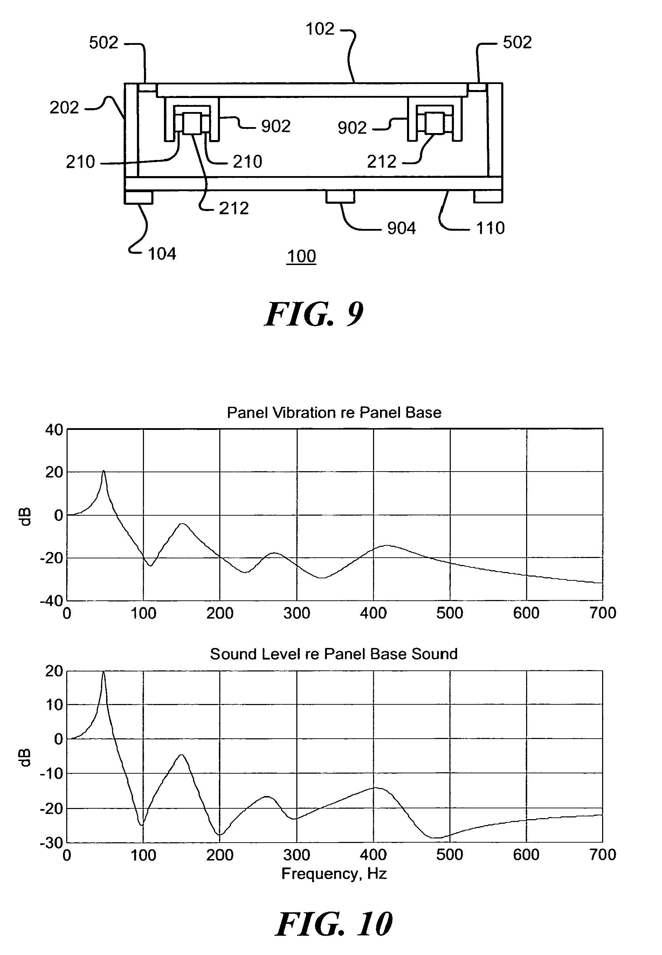

**FIG. 9** is a further sectional view of a sound absorber consistent with various embodiments of the invention. Referring to **FIG. 9,** the stiff structure 102 is suspended from the frame 202 via a compliant suspension 502. The compliant suspension 502 may be, for example, a membrane made of silicone, rubber or other compliant material. Other types of suspension are well known to those of ordinary skill in the art (such as those used for loudspeaker or electromagnetic shaker suspensions). The suspension may include an element that is stiff in response to in-plane of the stiff structure (i.e. motion parallel to the vibration surface). The frame 502 is mounted on a base or averaging plate 110, and the averaging plate 110 is in turn adapted to be mounted on a vibrating surface via a compliant acoustic seal 104. The averaging plate is so called because its motion is dependent upon a spatially weighted average of the motion of the vibrating surface to which is it attached. The averaging plate and frame may be integrated. The stiffness of the averaging plate 110 and the stiffness of the compliant couplings 104 are chosen so that the averaging plate is not substantially deformed by motion of the vibrating structure to which it is attached. In operation, motion of the vibrating surface causes the averaging plate 110 and frame 202 to move as a substantially rigid body. Motion of the frame causes dynamic forces to be applied to the stiff structure 102 via the suspension 502. Relative motion between the frame and the stiff structure cause additional forces to be applied via the fluid between the averaging plate and the stiff structure. However, the stiff structure is isolated from flexure of the vibrating structure. The dynamic response of the stiff structure 102 is controlled by masses 212 and springs 210 that are coupled to the stiff structure 102 via 'U-shaped' supports 902. Vertical (in the figure) motion of the frame causes the springs 210 to be deformed in shear. In one embodiment, the characteristics of the springs 210 and masses 212 are chosen such that the motion of the stiff structure is less than the motion of the averaging plate. For example, if the surface vibrates at 100 Hz, the springs and masses are chosen to minimize the motion of the stiff structure 102 at 100 Hz. This results in noise reduction.

The averaging plate 110 may be coupled to the vibrating surface by one, two or three relatively stiff (compared to the acoustic seal) mounts 904. When multiple mounts are used they should not apply significant force couples to the averaging plate. Up to three mounts may be used without causing the averaging plate to be deformed by the vibrating surface.

When relatively stiff mounts 904 are used, it is advantageous to place the mounts at location on the vibrating surface that have low vibration levels. For example, the mounts may be attached close to edges or corners of the vibrating structure. Alternatively, typical vibration levels may be measured at a variety of locations on the vibrating structure and the locations with low vibration selected as mount attachment points.

The relatively stiff mounts may be studs fixed to the vibrating surface. The sound absorber may be attached to the studs via compliant washers or bushes.

The relatively stiff mounts may be magnetic.

Vibration levels may be reduced still further by designing or modifying the vibrating structure to have areas of low vibration. This may be achieved by stiffening selected regions of the vibrating structure.

It is recognized that motion of the suspension or motion of any exposed area of the averaging plate 110 will result in noise radiation even when the stiff structure 102 is held still. In another embodiment, the characteristics of the springs and masses are chosen so that sound radiated from the stiff structure 102 cancels the sound 102. An example is shown in **FIG. 10. FIG. 10** is a graph of calculated performance of an exemplary sound absorber. The upper plot in

FIG. 10 shows the motion of the stiff structure 102 relative to the frame 202 or averaging plate 110. Thus at 100 Hz and 200 Hz, for example, the motion is 20 dB less than the motion of the averaging plate (i.e. 1/10th of the motion). The lower plot in FIG. 10 show the sound radiated from the region of the vibrating surface covered by the averaging plate 110, relative the sound that would be radiated without the sound absorber. It is assumed that, if the averaging plate 110 and the stiff structure 102 move with the same displacement, the volume velocity of the frame, averaging plate and suspension would be 1/10th that of the stiff structure, but with opposite phase. Thus, at 100 Hz and 200Hz, the volume velocity of the stiff structure cancels that of the suspension, frame and averaging plate. It is noted that improved noise reduction is obtain by tuning the resonance of the springs 210 and masses 212 to be at frequencies other than 100 Hz and 200 Hz.

The fluid between the averaging plate and the frame acts as an air spring - this makes it difficult to adjust the mass of the stiff structure 102 and the compliance of the suspension 502 to achieve the desired dynamic response without the use of heavy masses or deep frames. However, the springs 212 and masses 210 provide 'dynamic tuning' that achieves the desired response in selected frequency ranges without the use of heavy masses or deep frames.

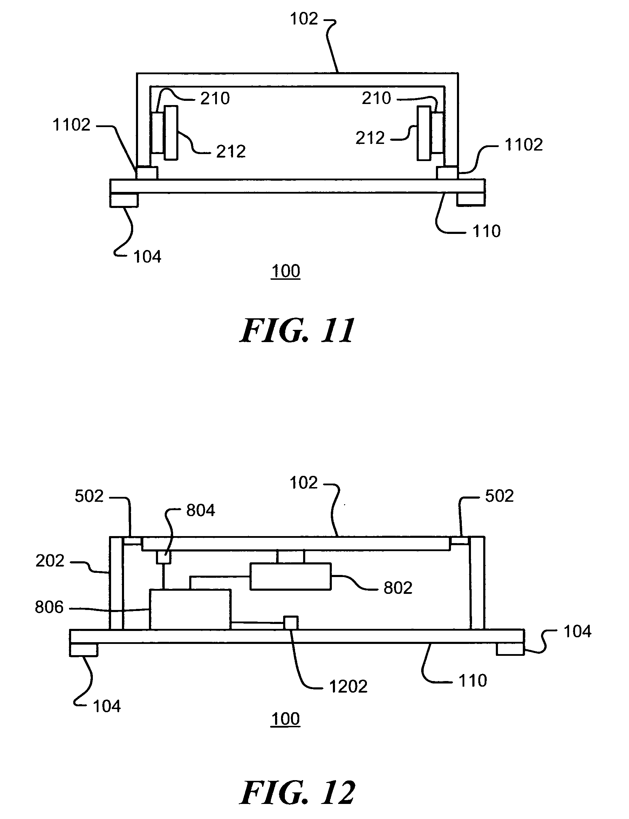

FIG. 11 is a further sectional view of a sound absorber consistent with various embodiments of the invention. The stiff structure 102 is integrated with the frame and is mounted on compliant coupling 1102 that performs a similar function to the suspension 502 in FIG. 9. Masses 212 are coupled to the sides of the stiff structure 102 via springs 210 that act in a shear mode. Alternatively, or additionally, the masses could be coupled to the top of the stiff structure. Multiple spring/mass elements may be used. These may be tuned the same frequencies or different frequencies. For example, three mass/spring elements may be used to prevent motion of the stiff structure in three degrees of freedom, or to control motion in one degree of freedom at three different frequencies.

FIG. 12 is a further sectional view of an active sound absorber consistent with various embodiments of the invention. In this embodiment, motion of the stiff structure 102 is controlled relative to the motion of the averaging plate. Motion perpendicular to the vibrating surface is controlled. In the figure, a vibration sensor 1202, such as an accelerometer, senses motion of the averaging plate 110 or frame 202. A controller 806 generates a control signal for an actuator 802. The controller may analog or digital or a combination thereof. The actuator 802 applies forces to the stiff structure to control its motion. Optionally, a second vibration sensor 804 may monitor the motion of the stiff structure.

In a further embodiment, rocking motions (rotations about axes parallel to the vibrating surface) can also be controlled by using additional sensors and additional actuators. Active control of rigid bodies is well known to those of ordinary skill in the art.

The actuator 802 may be an inertial actuator (as shown) or it may couple between the averaging plate and/or frame and the stiff structure 102. A combination of actuators may be used. In one embodiment, the stiff structure 102, suspension 502 and actuator 802 comprise a loudspeaker.

It is noted that the vibration sensor 804 does not measure motion of the vibrating surface. The averaging plate and frame have limited degrees of freedom of motion, whereas in general the vibrating surface has multiple degrees of freedom because of deformations of the surface.

The vibrating surface may be the solid surface of a vibrating structure or may be a fluid surface. The sound absorber described above may be used to construct a sound barrier. Sound incident upon the averaging plate 110 will be partially reflected and will excite the sound absorber. Sound radiated from the stiff structure will tend to cancel sound radiated from the suspension and any exposed area of averaging plate. Thus very little sound is transmitted through the sound absorber.

It is desired that the stiff structure, averaging plate and frame are relatively stiff compared to the acoustic seal 104. This may be achieved by use of suitable material and by the shape of the elements. For example, the stiff structure may be conical or dome shaped with various cross-sections (circular, elliptical, rectangular etc). The elements may be constructed corrugated or honeycomb material.

The presence of compliant elements such as couplings 1102 or suspension 502 and acoustic seal 104 provide effective vibration isolation of the stiff structure at higher frequencies. Thus, if the area of the stiff structure is a significant fraction of the area of the averaging plate, a net overall sound reduction will be achieved at higher frequencies.

One application of the sound absorber described above is the reduction of noise from power transformers. In this application, masses 212 and springs 210 may be used to tune the sound absorber to provide noise reduction at lower frequencies, while the vibration isolation property provides noise reduction at higher frequencies.

Another application is the reduction of sound from vibratory part feeders bowls. In this application, or other applications where it is desirable to view the sound source, the sound absorber may be constructed largely of transparent materials.

An actively controlled sound absorber can provide noise reduction over a range of frequencies and may be configured to adapt its control characteristic to match the vibration of the vibrating surface.

When the sound absorber is mounted on a non-horizontal surface, a support element may be provided to support the static weight of the sound absorber. This prevents 'sag' or tilt of the stiff structure. For example if the sound absorber is to be mounted on a vertical surface to reduce vibration that is predominately in the horizontal direction, the support element may be stiff in the vertical direction but flexible in the horizontal. In one embodiment, the support structure includes a 'spider', such as is commonly used in electromagnetic shakers. In a further embodiment, shown in **FIG's 13** and **14**, a wire or a strap is used, in a similar manner as would be used to hang a picture on a wall. Referring to **FIG's 13** and **14**, a hanger 1302 is rigidly attached to the vibration surface 106. A wire or strap 1304 is suspended from the hanger and is attached to the stiff structure. Preferably, the line of action of the support element should pass through the center of gravity of the stiff structure. In a related embodiment, the hanger may be positioned above the sound absorber.

In alternative embodiment, the line of action of the compliant element passes through the center of gravity of the stiff element. This may be achieved, for example, by appropriate positioning of a suspension. To improve manufacturability of the device, the suspension may include elements, such as elastomeric mounts, to support the stiff structure.

The sound absorber may be attached to a vibrating surface, such as the exterior surface of a power transformer or the interior surface of a propeller driven aircraft. In applications where the surface has stiffening ribs, the sound absorber may be attached to the stiffening ribs to reduce the vibration transmitted to the stiff structure.

The sound absorber may be sized and shaped to conform to the geometry of the vibrating surface.

While the invention has been described in conjunction with specific embodiments, it is evident that many alternatives, modifications, permutations and variations will become apparent to those of ordinary skill in the art in light of the foregoing description. Accordingly, it is intended that the present invention embrace all such alternatives, modifications and variations as fall within the scope of the appended claims.

**Claims**

1. A sound absorber operable to reduce sound radiated from a region of a vibrating surface at a first frequency, the sound absorber comprising:

   a stiff structure;
   a first compliant element operable to couple the stiff structure to the vibrating surface;
   a mass element;
   a coupling element coupling between the mass element and the stiff structure and operable to apply a dynamic force to the stiff structure at the first frequency, wherein the stiff structure and the first compliant element are operable to at least partially cover the region of the vibrating surface.

2. A sound absorber in accordance with claim 1, wherein the coupling element comprises a second compliant element, the coupling element and the mass element forming a tuned vibration absorber.

3. A sound absorber in accordance with claim 2, wherein the coupling element further comprises a controller operable to adjust the dynamic response of the tuned vibration absorber at the first frequency.

4. A sound absorber in accordance with claim 2, wherein the coupling element further comprises a vibration sensor operable to generate a sensor signal in response to vibration of the stiff structure and wherein the controller is responsive to the sensor signal.

5. A sound absorber in accordance with claim 1, wherein the coupling element comprises an actuator coupled between the mass element and the stiff structure, wherein the sound absorber further comprises:

   a sensor operable to sense a quantity related to the radiated sound; and
   a controller operable to control the actuator in response to a signal generated by the sensor.

6. A sound absorber in accordance with claim 1, further comprising a frame element coupled to the first compliant element, the first compliant element being operable to couple the stiff structure to the vibrating surface via the frame element.

7. A sound absorber in accordance with claim 6, further comprising an averaging plate coupled to the frame element and coupled to the vibrating surface via an acoustic seal, the first compliant element being operable to couple the stiff structure to the vibrating surface via the averaging plate and acoustic seal.

8. A sound absorber in accordance with claim 7, wherein the properties of the stiff structure, the first compliant element, the mass element and the coupling element are selected such that, in operation, the acoustic volume velocity of the stiff structure, frame and compliant element is substantially equal in amplitude and opposite in phase to the acoustic volume velocity of the averaging plate.

9.  A method for reducing sound radiation from a region of a vibrating surface, the method comprising:

    coupling a stiff structure to the vibrating surface using a first compliant element such that the region of the vibrating surface is at least partially covered; and
    applying a dynamic force to the stiff structure;

    wherein the dynamic force reacts against a mass element and is selected to minimize the radiated sound.

10. A method in accordance with claim 9, wherein the dynamic force is selected to minimize a combined acoustic volume velocity of the stiff structure, the first compliant element and the region of the vibrating surface that is not covered.

11. A method in accordance with claim 9, wherein applying the dynamic force comprises coupling the mass element to the stiff structure using a second compliant element, the mass element and the second compliant element forming a vibration absorber.

12. A method in accordance with claim 9, wherein applying the dynamic force comprises:

    coupling the mass element to the stiff structure using an actuator; and
    controlling the actuator to reduce sound radiated from the vibrating surface.

108           100

102

104      106      104

110

**_FIG. 1_**

102

208      212

202           204

212      210

206

110

100

**_FIG. 2_**

**FIG. 3**

**FIG. 4**

FIG. 5

FIG. 6

**FIG. 7**

**FIG. 8**

**FIG. 9**

**FIG. 10**

102

1102

210    210

212    212

1102

104    110

100

## FIG. 11

502    804    102    502

202

806    802

104    1202    110

104

100

## FIG. 12

→ 14

1302

102

1304

14

104

**FIG. 13**

106

104

1302

102

1304

104

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60698918 B
- US 60751013 B

- US 6478110 B1